**Europäisches Patentamt**

**European Patent Office**

**Office européen des brevets**

(19)

(11) Veröffentlichungsnummer : **0 389 670 B1**

(12) **EUROPÄISCHE PATENTSCHRIFT**

(45) Veröffentlichungstag der Patentschrift :
**04.01.95 Patentblatt 95/01**

(21) Anmeldenummer : **89113518.8**

(22) Anmeldetag : **22.07.89**

(51) Int. Cl.⁶ : **G01S 13/60, H03H 17/02**

(54) **Einrichtung zur Eigengeschwindigkeitsmessung eines Fahrzeuges nach dem Dopplerradarprinzip.**

(30) Priorität : **23.03.89 DE 3909644**

(43) Veröffentlichungstag der Anmeldung :
**03.10.90 Patentblatt 90/40**

(45) Bekanntmachung des Hinweises auf die
Patenterteilung :
**04.01.95 Patentblatt 95/01**

(84) Benannte Vertragsstaaten :
**DE FR GB IT SE**

(56) Entgegenhaltungen :
**EP-A- 0 048 394**
**EP-A- 0 095 300**
**EP-A- 0 125 108**

(56) Entgegenhaltungen :
**EP-A- 0 140 518**
**EP-A- 0 189 824**
**WO-A- 88/09537**
**US-A- 4 107 680**
**US-A- 4 319 245**

(73) Patentinhaber : **VDO Adolf Schindling AG**
**Gräfstrasse 103**
**D-60487 Frankfurt (DE)**

(72) Erfinder : **Roskoni, Ulrich**
**Taunusring 29**
**D-6362 Wöllstadt (DE)**

(74) Vertreter : **Klein, Thomas, Dipl.-Ing. (FH)**
**Sodener Strasse 9**
**D-65824 Schwalbach/Ts. (DE)**

EP 0 389 670 B1

**Beschreibung**

Die Erfindung betrifft eine Einrichtung zur Eigengeschwindigkeitsmessung eines Fahrzeugs nach dem Dopplerradarprinzip gemäß dem Oberbegriff des Anspruchs 1.

Die Eigengeschwindigkeitsmessung eines Fahrzeugs nach dem Dopplerradarprinzip beruht bekanntlich darauf, daß zwischen der Frequenz einer von dem Fahrzeug ausgesandten Wellenfront - Sendesignal - und der von dem Untergrund, gegenüber dem sich das Fahrzeug insbesondere horizontal bewegt, reflektierten und wiederum von dem Fahrzeug empfangenen Wellenfront eine Differenzfrequenz auftritt. Die Differenzfrequenz ist der Relativbewegung des Fahrzeugs gegenüber dem Untergrund proportional. In der vorliegenden Anmeldung soll unter den Begriffen "Doppler-Signal" und "Doppler-Frequenz" immer das Signal mit der Differenzfrequenz verstanden werden.

Zur technischen Realisierung des Verfahrens kann ein Doppler-Radarmodul verwendet werden, der einen Oszillator - Gunnoszillator -, einen Zirkulator, einen Mischer, eine Antenne - Hornstrahler - und einen Richtkoppler umfaßt. Der Oszillator erzeugt die hochfrequente sinusförmige Schwingung, die über den Zirkulator der Antenne zugeführt wird. Die Antenne strahlt diese Energie in den Raum, insbesondere in Richtung auf den Untergrund, auf dem sich das Fahrzeug bewegt, ab. Die am Untergrund reflektierte Welle wird von der Antenne wieder empfangen, und das entsprechende Empfangssignal wird über den Zirkulator dem Mischer zugeführt. In den Mischer wird über den Richtkoppler zusätzlich ein Teil der Sendeenergie eingespeist, so daß das Empfangssignal und das Sendesignal einander überlagert werden. In dem Mischer - Mischerdiode -, der mit dem Sendesignal und dem Empfangssignal beaufschlagt wird, findet ein Mischungsprozeß statt, mit dem u.a. das Doppler-Signal als Differenzfrequenz zwischen der Frequenz der ausgesendeten Welle und der Frequenz der empfangenen reflektierten Welle gebildet wird. Das Doppler-Signal wird über einen Verstärker zur Weiterverarbeitung bereitgestellt.

Bei realisierbaren Einrichtungen zur Eigengeschwindigkeitsmessung nach dem Dopplerprinzip tritt als Doppler-Signal nicht nur eine einzige Differenzfrequenz auf, sondern auch schon bei Messung der Eigengeschwindigkeit mittels nur eines einzigen denkbaren Reflexionspunktes ein Doppler-Spektrum. Bei in der Praxis auftretenden Boden, wie Asphaltboden oder Ackerboden, die durch eine stochastische Verteilung von Reflexionspunkten unterschiedlicher Reflexionsfaktoren angenähert werden können, ist das erfaßbare Doppler-Signal darüber hinaus durch Amplitudenlöschungen und Phasensprünge gestört. Ein solches Doppler-Spektrum weist eine unregelmäßige Verteilung der Amplitude in Abhängigkeit von der Frequenz auf, die außerdem zeitlich nicht konstant ist. Insbesondere lassen sich Schwankungen des Maximums auf der Frequenzachse feststellen.

Die nach dem vorgenannten Meßprinzip ermittelte Fahrzeuggeschwindigkeit ist daher mit einem großen Meßfehler behaftet.

Um diesen Meßfehler zu verringern, ist bereits ein Doppler-Radargeschwindigkeitsmesser mit einer Impulsweiten-Diskriminiereinrichtung bekannt, die das Maximum der Verteilungskurve des Doppler-Signals bzw. des Doppler-Frequenzspektrums ermitteln soll (DE-PS 32 19 819). Dieser Geschwindigkeitsmesser umfaßt einen Doppler-Radar-Sensor, der an dem Fahrzeug befestigt ist, Mikrowellen aussendet und einen Teil der vom Boden reflektierten Wellen empfängt und mit einem Teil der ausgesandten Wellen mischt. In einer Verstärker- und Impulsformereinrichtung werden die so entstandenen Doppler-Signale verstärkt,und es wird ein Doppler-Impulssignal erzeugt. In einem Periodendauerzähler wird das Doppler-Impulssignal in ein digitales Doppler-Signal umgesetzt. Zur Auswertung der digitalen Doppler-Signale dient der Ausgang des Periodendauerzählers als Adresse für einen Speicher. Eine Addiereinrichtung erhöht die Inhalte des Speichers unter jeder angesteuerten Adresse für jedes anliegende Doppler-Impulssignal um Eins, bis eine vorgegebene Anzahl von digitalen Doppler-Impulssignalen vollständig addiert ist. Die oben erwähnte Impulsweiten-Diskriminiereinrichtung ermittelt beim Auftreten des n-ten Doppler-Impulssignals die dem Speicherinhalt $\frac{n}{2}$ zugeordnete Adresse als Maß für die gesuchte Geschwindigkeit. - Dieser bekannte Doppler-Radargeschwindigkeitsmesser hat jedoch den Nachteil, daß zum Erzielen einer ausreichenden Genauigkeit die digitalen Doppler-Signale über längere Zeiten gemessen und ausgewertet werden müssen, wenn die Anzahl der n Doppler-Impulssignale nicht zu klein und damit die Ermittlung der der Fahrzeuggeschwindigkeit entsprechenden Doppler-Frequenz, die auch als Mittenfrequenz bezeichnet wird, ungenau sein dürfen. Die Messung und Auswertung der Doppler-Signale geht jedoch auf Kosten der Dynamik des Verfahrens und des nach ihm arbeitenden Doppler-Radargeschwindigkeitsmessers. Diese mangelhafte Dynamik stört insbesondere dann, wenn sie in Verbindung mit einer Antiblockiereinrichtung arbeiten soll.

Um das Spektrum der reflektierten Strahlung zu verringern und damit die Integrationszeit zur Ermittlung einer mittleren Doppler-Frequenz herabzusetzen, welcher die Eigengeschwindigkeit des erdgebundenen Fahrzeugs entspricht, ist bereits eine als Schlitzantennen-Hohlleiter ausgebildete spezielle Antenne bekannt (DE-PS 22 37 139). Der Schlitzantennen-Hohlleiter ist mit seiner Längsachse parallel zur Richtung des Geschwindigkeitsvektors und mit seinen Breitseiten quer dazu parallel zur Erdoberfläche ausgerichtet. Außerdem besitzt er in seiner unteren Breitseite einen etwas außerhalb der Breitseitenmitte verlaufenden Längsschlitz für die Radarschwingungen. - Um eine weitere Verfälschung oder Verbreiterung des Doppler-Spektrums, die bei Nickschwingungen des Fahrzeugs auftreten können, zu vermeiden, ist ein zweikanaliges Doppler-Radargerät bekannt (DE-PS 22 37 139), bei dem mit zwei Mischern ein Doppler-Signal aus der Strahlung in Fahrtrichtung und ein Doppler-Signal aus der Strahlung gegen die Fahrtrichtung gebildet werden. Beide Signale werden bei der Auswertung miteinander kombiniert. - In diesem Zusammenhang ist weiter bekannt, einen Fehler im Doppler-Signal durch vertikale Schwingungen bzw. Abstandsänderungen des Fahrzeugs zu dem Boden durch ein Korrektursignal zu kompensieren. Hierzu wird ein weiterer Mischer mit einer Diode eingesetzt, der eine quasi-optisch gespiegelte Radarstrahlung empfängt, die einer Doppler-Verschiebung nicht unterworfen ist, aber ihre Phasenlage in Abhängigkeit von dem Abstand der Antenne zum Boden ändert. Die Mischung der sogenannten gespiegelten Strahlung mit dem in dem Hohlleiter verbliebenen Restsignal des Senders ergibt eine niederfrequente Schwingung, mit welcher der bei der Messung des Doppler-Signals auftretende Fehler kompensiert werden kann. - Die vorangehenden Maßnahmen zur Erhöhung der Genauigkeit der gemessenen Doppler-Frequenz erhöhen den Aufwand und können die Anwendbarkeit des Meßprinzips einschränken oder sind nur geeignet, bestimmte Ursachen der Verfälschung der gemessenen Doppler-Signale zu kompensieren.

Der vorliegenden Erfindung liegt die Aufgabe zugrunde, eine Doppler-Frequenz, der die Eigengeschwindigkeit des Fahrzeugs entspricht, auch aus unregelmäßigen, stark schwankenden Doppler-Spektren rasch und genau zu ermitteln. Zu der entsprechenden Auswertung der Doppler-Signale soll kein hoher zusätzlicher Aufwand erforderlich sein.

Diese Aufgabe wird durch die Einrichtung zur Eigengeschwindigkeitsmessung nach dem Oberbegriff des Anspruchs 1 mit der in dem kennzeichnenden Teil dieses Anspruchs angegebenen Auswertung gelöst.

Eine Einrichtung nach dem Oberbegriff von Anspruch 1 ist aus der Druckschrift EP-A3-0095300 bekannt, während ein Medianfiter aus der Druckschrift WO-A1-88/09537 bekannt ist.

Vorteilhafte Weiterbildungen der Erfindung sind in den Ansprüchen 2-4 angegeben.

Die Erfindung wird im folgenden anhand einer Zeichnung mit sechs Figuren erläutert. Es zeigen:

Fig. 1    ein Blockschaltbild der Einrichtung zur Eigengeschwindigkeitsmessung in stark vereinfachter Darstellung,

Fig. 2    eine schematische Darstellung eines Teils der in Fig. 1 angedeuteten Auswerteinrichtung, d.h. des Teils zur Bestimmung des Medians,

Fig. 3    eine schematische Darstellung eines Teils der in Fig. 1 angedeuteten Auswerteinrichtung, d.h. des Teils zur Bestimmung des Medians in einer anderen Ausführungsform,

Fig. 4    eine Zeitdarstellung der gemessenen Doppler-Frequenz ohne Medianbildung,

Fig. 5    eine ähnliche Darstellung wie Fig. 4, jedoch mit Medianbildung der gemessenen Doppler-Frequenz und

Fig. 6    eine schematische Darstellung des Quadraturmischers.

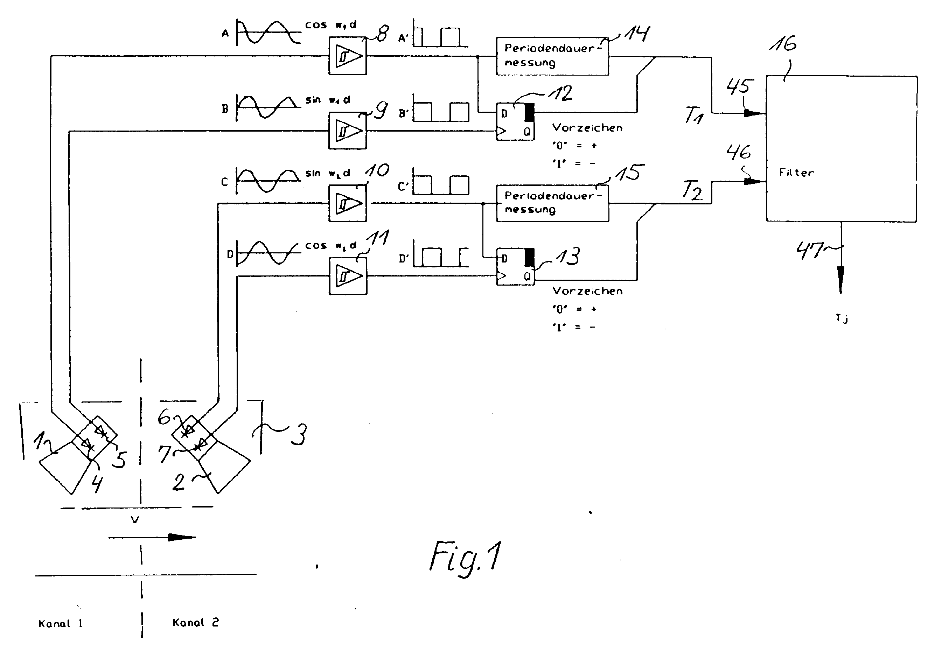

In dem Blockschaltbild in Fig. 1 ist eine zweikanalige Einrichtung zur Eigengeschwindigkeitsmessung mit zwei im wesentlichen entgegengesetzt gerichteten Doppler-Radarsensoren 1 und 2 dargestellt, die in einem sogenannten Januskopf 3 angeordnet sind. Der Januskopf ist mit einem nicht dargestellten Fahrzeug fest verbunden und wird mit diesem in Fahrtrichtung v bewegt. Jede der beiden Doppler-Signalsensoren enthält einen Quadraturmischer, der durch die Mischerdioden 4, 5 bzw. 6, 7 angedeutet ist. Diese Einrichtung bietet die beste Voraussetzung dafür, daß die Einflüsse von Nick- und Höhenbewegungen des Fahrzeugs am geringsten sind.

Zur Auswertung der Doppler-Frequenzmeßwerte, die von den Mischprodukten der Quadraturmischer ausgefiltert sind und mit den zeitlichen Verläufen A, B, C, D in Fig. 1 dargestellt sind, erfolgt in der Weise, daß die Doppler-Frequenzmeßwerte zunächst in Schmitttrigger 8 - 11 eingespeist werden, in denen die Schwingungen der Doppler-Frequenzmeßwerte in entsprechende Rechteckpulse A′, B′, C′, D′ umgesetzt werden. Zur Bildung von Vorzeichen-Signalen, die die Bewegungsrichtung des Fahrzeugs angeben, sind zwei D-Flip-Flops 12, 13 vorgesehen. Dabei ist der Ausgang des Schmitttriggers 8 an einen D-Eingang des D-Flip-Flops 12 angeschlossen, ein Ausgang des Schmitttriggers 9 an einen dynamischen Eingang des gleichen D-Flip-Flops. Ein Ausgang des Schmitttriggers 10 steht mit dem D-Eingang des D-Flip-Flops 13 in Verbindung, dessen dynamischer Eingang von dem Ausgang des Schmitttriggers 11 beaufschlagt wird.

Weiterhin steht ein Ausgang des Schmitttriggers 8 mit einem Eingang eines Umsetzers 14 zur Periodendauermessung in Verbindung und ein Ausgang des Schmitttriggers 10 mit einem weiteren Umsetzer 15 zur Periodendauermessung. In den Umsetzern zur Periodendauermessung werden die digitalen Doppler-Signalmeßwerte als Binärzahlen gewonnen. Sie werden mit den Vorzeichensignalen ergänzt für jeden Kanal getrennt in eine allgemein mit 16 bezeichnete Auswerteeinrichtung eingespeist.

Die Auswerteeinrichtung enthält für jeden Kanal eine Speicherkette, die insbesondere durch ein Schieberegister realisiert sein kann sowie einen Sortierer, mit dem eine definierte Anzahl m diskreter Doppler-Signalmeßwerte zur Bildung des Medians dieser Doppler-Signalmeßwertfolge ausgewertet werden.

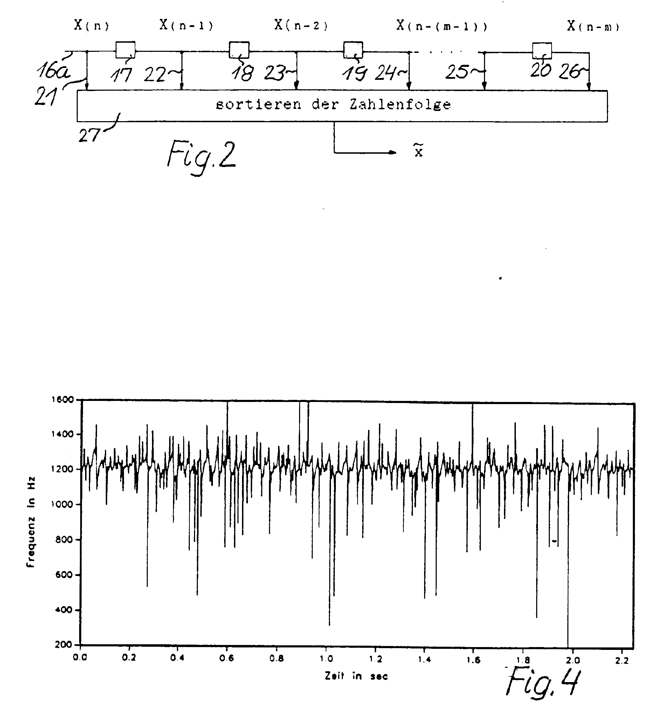

Ein entsprechender Teil für einen Kanal der Auswerteeinrichtung ist in Fig. 2 schematisch dargestellt. Auf einer Leitung 16a werden die digitalen Doppler-Signalmeßwerte X(n), X(n-1) usw. durchgeschoben. Dabei bedeutet X(n) den n-ten Doppler-Signalmeßwert. Verzögerungselemente 17 - 20 sorgen dafür, daß die aufeinanderfolgenden Doppler-Signalmeßwerte jeweils um ein Meßintervall verzögert werden. An Abgängen 21 - 26 der Leitung 16a stehen daher parallel zueinander die m Doppler-Signalmeßwerte an, die in dem Sortierer 27 sortiert werden. Der Sortierer ist im einzelnen so aufgebaut, daß die Folge der m Doppler-Signalmeßwerte in eine neue Folge ansteigender Wertigkeit sortiert wird und aus letzterer der an mittlerer Stelle stehende Median (Zentralwert) $\widetilde{X}$ gebildet wird.

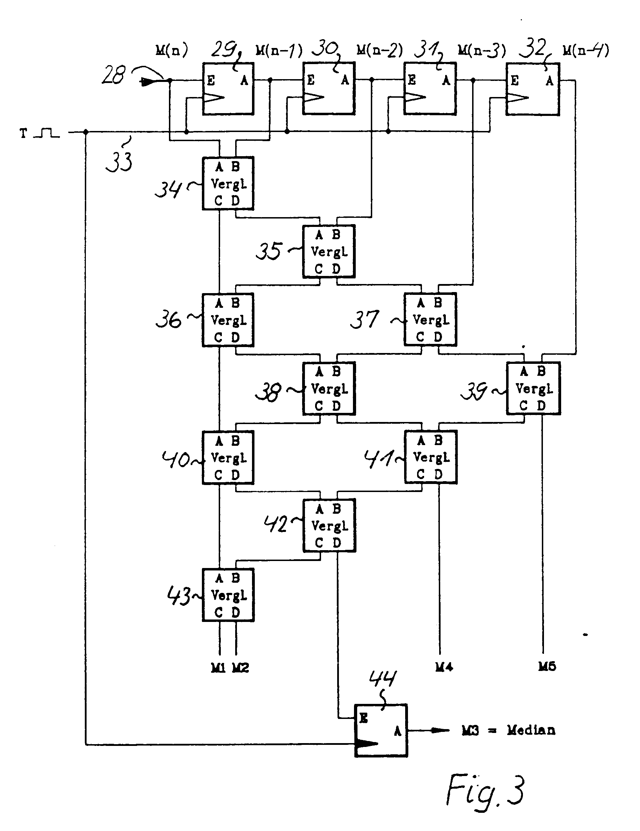

In einer in Fig. 3 dargestellten Realisierung des Teils der Auswerteinrichtung zur Medianbildung sind weitere Einzelheiten gezeigt. Es handelt sich wiederum um den Teil für einen der beiden Kanäle. Die Zeitverzögerung ist durch ein Schieberegister mit dem Eingang 28 und den Speichern 29 - 32 aufgebaut, deren dynamischer Eingang über eine Schiebeimpulsleitung 33 mit bei jedem Meßintervall auftretenden Schiebeimpulsen gemeinsam in Verbindung steht. Die Speicher 28 - 32 bilden ein Schieberegister für fünf Meßwerte. Der Meßwertumfang beträgt daher m = 5 (die Meßwerte sind hier mit M bezeichnet.

In den einzelnen Speichern sind die Eingänge mit E und die Ausgänge mit A markiert. Die Ausgänge der Speicher für die Doppler-Signalmeßwerte M(n-1) bis M(n-4) sowie der Meßwert M (n) stehen mit dem eigentlichen Sortierer in Verbindung, der durch die in Fig. 3 dargestellte Anordnung von Vergleichern 34 - 43 gebildet wird. Die Vergleicher sind jeweils so aufgebaut, daß der Eingang A mit dem Ausgang D verbunden ist und der Eingang B mit dem Ausgang C, wenn der digitale Wert an dem Eingang A größer ist als der digitale Wert an dem Eingang B. Wenn hingegen diese Bedingung nicht erfüllt ist, steht Eingang A mit dem Ausgang C in Verbindung und Eingang B mit dem Ausgang D.

Zu den in Fig. 3 angegebenen Symbolen wird zusammengefaßt:

T = Schiebeimpuls

M(n) = n-ter Meßwert

M1 - M5 = sortierte Meßwertfolge M1 < M2 < M3 < M4 < M5

M3 = Median

Aus der Darstellung der Verknüpfung in Fig. 3 und der angegebenen Funktion der Vergleicher 34 - 43 ergibt sich unmittelbar, wie aus den Ausgangssignalen der Speicher 28 - 32 eine umgruppierte Folge Doppler-Signalmeßwerte M1 - M5 ansteigender Wertigkeit gebildet wird. Der zentrale Wert M3 wird aus dem Vergleicher 42 ausgelesen und mit einem Medianspeicher 44 gespeichert. (Da von dem in Fig. 3 dargestellten Sortierer bzw. Medianfilter nur die Ausgangsgröße M3 des Medianspeichers 44 interessiert, kann der Vergleicher 43 entfallen.)

Die Auswerteeinrichtung 16 in Fig. 1 umfaßt für jeden der beiden Eingänge 45, 46 je einen Sortierer mit einem Speicher gemäß Fig. 3, in dem die digitalen Doppler-Signalmeßwert T1 bzw. T2 nach dem Medianmittelungsverfahren geglättet wird.

Weiterhin umfaßt die Auswerteeinrichtung 16 einen arithmetischen Mittelwertbilder (nicht bezeichnet), der den arithmetischen Mittelwert der Mediane $\widetilde{T1}$ und $\widetilde{T2}$ bildet. An einem Ausgang 47 der Auswerteeinrichtung 16 steht damit ein digitales Signal der Periodendauer der resultierenden Doppler-Frequenz aus beiden Kanälen an. Diese Periodendauer ist mit Tj bezeichnet. Sie kann durch einen weiteren Umsetzer, der in Fig. 1 nicht dargestellt ist, in ein Geschwindigkeitssignal der Eigengeschwindigkeit umgesetzt werden. Dieser Umsetzer realisiert die proportionale Beziehung zwischen der aus der Periodendauer Tj abgeleiteten mittleren Doppler-Frequenz und der Eigengeschwindigkeit des Fahrzeugs.

Das Verfahren zur Eigengeschwindigkeitsmessung ergibt sich aus der voranstehenden Beschreibung der Einrichtung.

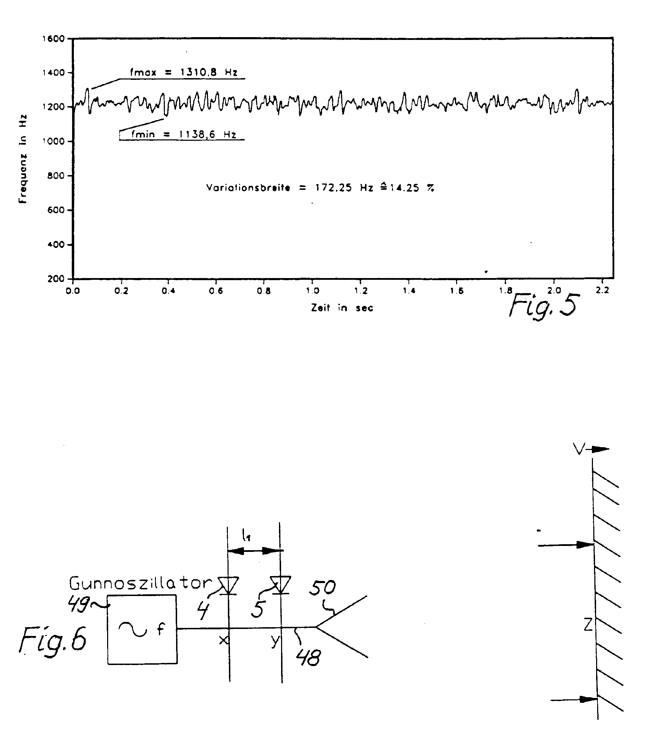

In den Figuren 4 und 5 ist die glättende Wirkung der Medianbildung aus gemessenen Doppler-Frequenzen veranschaulicht, wobei der Median die mittlere Doppler-Frequenz mit geringer Schwankung im Verlaufe der fortlaufenden Auswertung darstellt.

Im einzelnen zeigt Fig. 4 das Ergebnis der Frequenzmessung aus einem Radarsignal (einkanalig), in der die Frequenz sehr stark um die theoretische mittlere Doppler-Frequenz von 1.209 Hz schwankt. Auffällig sind schmale Impulse, deren Spitzen bis zu 90 % von der mittleren Doppler-Frequenz abweichen.

Fig. 5 zeigt hingegen einen entsprechenden Signalverlauf nach Bildung des Medians über elf diskrete Doppler-Signalmeßwerte einer Folge. Es ist eine deutliche Reduktion der Schwankungen um die für die Eigengeschwindigkeit maßgebliche mittlere Doppler-Frequenz und eine deutliche Unterdrückung der Extremwerte der Doppler-Signalmeßwerte zu erkennen. Durch Vergleich der Signalverläufe in den Figuren 4 und 5 wird die Glättung der Doppler-Signalmeßwerte deutlich, die eine entsprechend genaue Eigengeschwindigkeitsbestimmung zulassen. - Es wird bemerkt, daß der Signalverlauf nach Fig. 5 nicht mit der Anordnung gemäß Fig. 3 erzielt wird, da Fig. 3 nur die Medianbildung aus einem Meßwertumfang von M = 5 vorgesehen ist. Die Genauigkeit wird mit wachsendem Meßwertumfang verbessert.

Die in Fig. 1 dargestellten Doppler-Signalsensoren 1 und 2, die Schmitttrigger 8 - 11, die D-Flip-Flops 12 und 13 sowie die Umsetzer 14 und 15 sind nach dem Stand der Technik aufgebaut und funktionieren in an sich bekannter Art und Weise.

Mit den Umsetzern 14, 15 wird jeweils die Periodendauer der Doppler-Signalmeßwerte ermittelt. Die Frequenz kann dann - hier nach Medianbildung und Mittelwertbildung - aus dem Kehrwert der gemessenen Periodendauer bestimmt werden. - Das ebenfalls zum Stand der Technik gehörende D-Flip-Flop 12 bzw. 13 stellt einen Speicher dar, der den Zustand des D-Eingangs übernimmt, wenn an dem Takteingang bzw. dynamischen Eingang eine logische "1" liegt. An einem Ausgang Q (siehe Fig. 1) bleibt die Information von dem D-Eingang erhalten bis das Signal an dem Takteingang "1" ist und an dem D-Eingang "0" ist. Insgesamt ermittelt das D-Flip-Flop, ob das Signal A′ oder B′ gegenüber dem jeweils anderen Signal nacheilt, und gibt an seinem Ausgang Q bzw. Q invertiert ein entsprechendes Vorzeichensignal ab, welches ein Kriterium für die Bewegungsrichtung des Fahrzeugs ist.

Als Beispiel zur Glättung der Doppler-Signalmeßwerte kann von folgender Zahlenfolge ausgegangen werden: 5     6     8     3     2     -100     10.
Die neue Folge, in der die Doppler-Signalmeßwerte entsprechend ihrer Wertigkeit gruppiert sind lautet: -100     2     3     5     6     8     10.
Hieraus ergibt sich als Median (Zentralwert): 5.

Zum Vergleich gegenüber dem Stand der Technik wird der arithmetische Mittelwert angegeben, der hier $-\frac{66}{7} = -9{,}43$ ist und somit wesentlich von dem Median abliegt.

In Fig. 6 ist gezeigt, wie die Mischerdioden z.B. 4, 5 des Quadraturmischers an einer Leitung 48 zwischen einem Oszillator 49 und einer Antenne 50 zueinander versetzt angeordnet sind. Der Abstand $\ell 1$ der Ankopplungen der beiden Mischerdioden 4 und 5 an den Stellen x und y der Leitung 48 beträgt dabei ein ungeradzahliges Vielfaches von $\frac{\lambda}{8}$. In Fig. 6 ist das Reflexionsziel, d.h. der Boden mit z bezeichnet, demgegenüber sich die Antenne 50 mit der Geschwindigkeit v bewegt.

## Patentansprüche

1. Einrichtung zur Eigengeschwindigkeitsmessung eines Fahrzeuges nach dem Dopplerradarprinzip mit einem an ihm angebrachten Doppler-Radarsensor (1, 2), mit einem Mischer (4, 5; 6, 7), der mit Mikrowellen der ausgesendeten Frequenz sowie mit von dem Doppler-Radarsensor (1, 2) empfangenen Mikrowellen gespeist ist, mit einem an einem Ausgang des Mischers (4, 5; 6, 7) angeschlossenen Impulsformer (8, 9; 10, 11), mit einem dem Impulsformer (8, 9; 10, 11) nachgeschalteten Periodendauermesser (14, 15), der für jede digitalisierte Periode einen digitalen Doppler-Frequenzwert erzeugt, dadurch gekennzeichnet, daß eine dem Periodendauermesser (14, 15) nachgeschaltete Auswerteeinrichtung (16), welche aus einer vorgegebenen Anzahl Doppler-Frequenzwerte ein Maß für die gesuchte Geschwindigkeit mittelt, ein Medianfilter umfaßt, dessen Eingänge gleitend mit einer fortlaufenden Folge digitaler Doppler-Frequenzwerte (T1, T2) beaufschlagt werden und daß das Medianfilter an eine Schieberegisteranordnung (28-32) angeschlossen ist, dessen Eingang (28) mit den digitalen Doppler-Frequenzmeßwerten (T1, T2) beaufschlagt wird und dessen Schieberegisterstufen (28-32) bei jedem Meßintervall (Meßperiode) mit einem Schiebetakt getaktet werden und daß das Medianfilter Vergleicher (34-44) umfaßt, deren Eingänge mit Ausgängen der Schieberegisterstufen (28-32) sowie miteinander so verknüpft sind, daß sie aus den in den Schieberegisterstufen (28-32) gespeicherten digitalen Doppler-Frequenzwerten (T1, T2) den den Median darstellenden digitalen Doppler-Frequenzwert ausfiltern.

2. Einrichtung nach Anspruch 1, dadurch gekennzeichnet, daß ein Quadraturmischer mit zwei um ein ungeradzahliges Vielfaches von $\frac{\lambda}{8}$, bezogen auf die Sendefrequenz, versetzt an einem Leiter in dem Doppler-Radarsensor (1 bzw. 2) zwischen dem Oszillator (49) und der Antenne (50) gekoppelten Mischerdioden (4, 5) vorgesehen ist, und daß zwei Doppler-Signale (A, B bzw. C, D) beider Mischerdioden in einen Vorzeichendiskriminator eingespeist werden, der ein der Phasenbeziehung zwischen den beiden Doppler-Signalen (A, B bzw. C, D) entsprechendes Vorzeichensignal generiert, welches zusammen mit dem zugehörigen digitalen Doppler-Frequenzwert der Auswerteeinrichtung (16) mit dem Medianfilter zugeführt wird.

3. Einrichtung nach Anspruch 2, dadurch gekennzeichnet, daß der Vorzeichendiskriminator aus einem D-Flip-Flop (12 bzw. 13) mit einem statischen Eingang (D) und einem dynamischen Eingang besteht, die mit je einer der beiden Mischerdioden (4, 5 bzw. 6, 7) des Quadraturmischers in Verbindung stehen.

4. Einrichtung nach den Ansprüchen 2 bis 3, mit einem zweikanaligen Doppler-Radarsensor mit Quadraturmischern, dadurch gekennzeichnet, daß in jedem Kanal je ein Periodendauermesser (Umsetzer 14 bzw. 15) sowie je ein Vorzeichendiskriminator (D-Flip-Flop 12 bzw. 13) einer Auswerteeinrichtung (16) vorgeschaltet sind, die ein Medianfilter für jeden Kanal umfaßt und daß die Ausgänge der Medianfilter an einen arithmetischen Mittelwertbildner angeschlossen sind, dessen Mittelwert ein Maß für die gesuchte Eigengeschwindigkeit (Horizontalgeschwindigkeit) ist.

## Claims

1. A device for measuring the inherent speed of a vehicle according to the Doppler radar principle, having a Doppler radar sensor (1, 2) provided thereon, having a mixer (4, 5; 6, 7) which is supplied with microwaves of the emitted frequency and with microwaves received by the Doppler radar sensor (1, 2), having a pulse shaper (8, 9; 10, 11) connected to one output of the mixer (4, 5; 6, 7), having a period measuring device (14, 15) which is connected downstream of the pulse shaper (8, 9; 10, 11) and which generates a digital Doppler frequency value for each digitised period, characterised in that an evaluation device (16), which is connected downstream of the period measuring device (14, 15) and which averages a quantity for the required speed from a predetermined number of Doppler frequency values, comprises a median filter, the inputs of which are acted upon progressively by a continuous sequence of digital Doppler frequency values (T1, T2), and that the median filter is connected to a shift register arrangement (28-32), the input (28) of which is acted upon by the measured digital Doppler frequency values (T1, T2) and the shift register stages (28-32) of which are clocked with a shift cycle over each measuring interval (measuring period), and the median filter comprises comparators (34-44), the inputs of which are connected to outputs of the shift register stages (28-32) and to each other so that they filter out the digital Doppler frequency value constituting the median from the digital Doppler frequency values (T1, T2) stored in the shift register stages (28-32).

2. A device according to claim 1, characterised in that a quadrature mixer is provided, with two mixer diodes (4, 5) coupled to a conductor in the Doppler radar sensor (1 and 2, respectively) between the oscillator (49) and the antenna (50) and staggered by an odd multiple of $\lambda/8$ with respect to the transmission frequency, and that two Doppler signals (A, B and C, D, respectively) of both mixer diodes are stored in a sign discriminator which generates a sign signal corresponding to the phase relationship between the two Doppler signals (A, B and C, D, respectively), which signal is also fed to the median filter together with the associated digital Doppler frequency value of the evaluation device (16).

3. A device according to claim 2, characterised in that the sign discriminator consists of a D flip-flop (12 and 13, respectively) with a static input (D) and a dynamic input, which inputs are each connected to one of the two mixer diodes (4, 5 and 6, 7, respectively) of the quadrature mixer.

4. A device according to claims 2 to 3, having a two-channel Doppler radar sensor with quadrature mixers, characterised in that in each channel a period measuring device (converter 14 or 15) and a sign discriminator (D flip-flop 12 or 13) are connected upstream of an evaluation device (16) which comprises a median filter for each channel, and that the outputs of the median filter are connected to an arithmetic mean former, the mean value of which is a measure of the required inherent speed (horizontal speed).

## Revendications

1. Dispositif pour la mesure de la vitesse propre d'un véhicule automobile selon le principe d'un radar à effet Doppler-Fizeau, le dispositif comportant un détecteur (1, 2) de radar à effet Doppler-Fizeau qui lui est associé, un mélangeur (4, 5 ; 6, 7) alimenté en des microondes à la fréquence d'émission ainsi que par des microondes reçues par le détecteur (1, 2) de radar à effet Doppler-Fizeau, un formateur (8, 9 ; 10, 11) d'impulsions relié à une sortie du mélangeur (4, 5 ; 6, 7), un mesureur (14, 15) de durée des périodes monté après le formateur (8, 9 ; 10, 11) d'impulsions et qui produit, pour chaque période numérisée, une valeur numérique de fréquence Doppler-Fizeau;dispositif caractérisé en ce qu'un dispositif (16) d'analyse et d'exploitation, monté en aval du mesureur (14, 15) de durée de période et qui, à partir d'un nombre prédéterminé de valeurs de fréquence Doppler-Fizeau, calcule une mesure constituant la moyenne de la vitesse cherchée et englobe un filtre médian dont les entrées sont alimentées de manière flottante par une suite continue de valeurs numériques de fréquence Doppler (T1, T2) et en ce que le filtre médian est associé à un agencement (28-32) de registre à décalage dont l'entrée (28) est alimentée par les valeurs numériques (T1, T2) de mesure de fréquence Doppler et dont les étages (28-32) du registre à décalage sont cadencés à chaque intervalle de mesure (période de mesure) avec une cadence d'horloge de décalage et en ce que le filtre médian comporte des comparateurs (34-44), dont les entrées sont reliées aux sorties des étages (28-32) du registre à décalage ainsi qu'entre elles de manière qu'elles éliminent, par filtrage des valeurs (T1, T2) de fréquence numérique Doppler mémorisées dans les étages (28-32) du registre à décalage, la valeur numérique de fréquence Doppler représentant la valeur médiane ou moyenne.

2. Dispositif selon la revendication 1, caractérisé en ce qu'un mélangeur à quadrature de phase est prévu avec deux diodes mélangeuses (4, 5) couplées, avec un décalage d'un multiple impair de λ/8, par rapport à la fréquence d'émission, sur un conducteur dans le détecteur de radar à effet Doppler-Fizeau (1 ou 2) entre l'oscillateur (49) et l'antenne (50), et en ce que deux signaux Doppler (A, B ou C, D) des deux diodes mélangeuses sont introduites dans un discriminateur de signe, qui engendre un signal de signe correspondant à la relation de rapport entre les phases entre les deux signaux Doppler (A, B ou C, D), signal qui, avec la valeur de fréquence Doppler numérique correspondante est acheminéà l'aide du filtre médianau dispositif (16) d'analyse et d'exploitation.

3. Dispositif selon la revendication 2, caractérisé en ce que le discriminateur de signe consiste en une bascule D-"Flip-Flop" (12 ou 13) comportant une entrée statique (D) et une entrée dynamique qui sont en liaison avec chacune des deux diodes mélangeuses (4, 5 ou 6, 7) du mélangeur à quadrature de phase.

4. Dispositif selon les revendications 2 à 3, comportant un détecteur de radar à effet Doppler-Fizeau à deux canaux avec des mélangeurs en quadrature de phase, dispositif caractérisé en ce que, dans chaque canal, un mesureur de durée de période (convertisseur 14 ou 15) ainsi qu'un discriminateur de signe (bascule D 12 ou 13) sont placés avant un dispositif (16) d'analyse et d'exploitation comportant un filtre médian pour chaque canal et en ce que les sorties du filtre médian sont reliées à un formateur de valeur arithmétique moyenne, dont la valeur moyenne constitue une mesure de la vitesse propre recherchée (vitesse horizontale).

Fig.1

EP 0 389 670 B1

X(n)    X(n-1)    X(n-2)    X(n-(m-1))    X(n-m)

sortieren der Zahlenfolge

$\tilde{x}$

Fig.2

Fig.4

9

Fig. 3

Fig. 5

Fig. 6